# EUROPEAN PATENT APPLICATION

(11) **EP 4 564 978 A1**
(43) Date of publication of application: **04.06.2025**
(21) Application number: 23870148.6
(22) Date of filing: 31.08.2023
(51) Int. Cl.: H04W 72/1268

(54) **DRX CONFIGURATION-BASED COMMUNICATION METHOD, COMMUNICATION DEVICE, AND COMMUNICATION SYSTEM**

(30) Priority: 28.09.2022 CN 202211193732
(71) Applicant: Huawei Technologies Co., Ltd., Shenzhen, Guangdong 518129 (CN)
(72) Inventor: XU, Rui, Shenzhen, Guangdong 518129 (CN); CHEN, Erkai, Shenzhen, Guangdong 518129 (CN); CAO, Youlong, Shenzhen, Guangdong 518129 (CN); QIN, Yi, Shenzhen, Guangdong 518129 (CN)
(74) Representative: Maiwald GmbH
(86) International application number: PCT/CN2023/116271
(87) International publication number: WO 2024/066908

(57) **Abstract**

A DRX configuration-based communication method, a communication apparatus, and a communication system are provided. The method includes: When a moment when a scheduling request is sent is close to next DRX active time, a terminal may continue to wait for arrival of the next DRX active time, and monitor a PDCCH in the next DRX active time. Because the PDCCH is monitored in the next DRX active time instead of current DRX non-active time, additional power consumption of the terminal can be avoided. In addition, because the moment when the scheduling request is sent is close to the next DRX active time, time for the terminal to wait for the arrival of the next DRX active time is also short, and uplink data does not expire. Therefore, compared with a solution of monitoring the PDCCH in the current DRX non-active time, this solution can reduce power consumption of the terminal.

## Description

### CROSS-REFERENCE TO RELATED APPLICATIONS

This application claims priority to Chinese Patent Application No. 202211193732.8, filed with the China National Intellectual Property Administration on September 28, 2022 and entitled "DRX CONFIGURATION-BASED COMMUNICATION METHOD, COMMUNICATION APPARATUS, AND COMMUNICATION SYSTEM", which is incorporated herein by reference in its entirety.

### TECHNICAL FIELD

Embodiments of this application relate to the field of wireless communication technologies, and specifically, to a DRX configuration-based communication method, a communication apparatus, and a communication system.

### BACKGROUND

In recent years, with continuous development of 5th generation (5th generation, 5G) communication, a data transmission delay is continuously reduced, and a transmission capacity is increasingly large. 5G communication gradually penetrates into some multimedia services with strong real-time performance and a high data capacity requirement, such as video transmission, cloud gaming (cloud gaming, CG), and extended reality (extended reality, XR). XR includes virtual reality (virtual reality, VR) and augmented reality (augmented reality, AR).

With a rapid increase of a communication transmission rate, a real-time video transmission service has gradually become one of core services in a current network. With continuous progress and improvement of extended reality technologies, related industries have also been vigorously developed. Nowadays, a VR technology, as a kind of XR, has entered education, entertainment, military, medical care, environmental protection, transportation, public health, and other fields closely related to people's production and life. Compared with a conventional video service, VR provides a brand-new visual experience for a user because of multi-view and strong interaction advantages.

With emergence of the foregoing services, a requirement on a transmission delay of service data is increasingly high. In addition, an increase of a service data amount also poses a new challenge to power consumption of a terminal. Therefore, how to reduce power consumption of the terminal without degrading user experience needs continuous attention.

### SUMMARY

This application provides a DRX configuration-based communication method, a communication apparatus, and a communication system, to reduce power consumption of a terminal and improve user experience.

According to a first aspect, an embodiment of this application provides a DRX configuration-based communication method. The method may be performed by a terminal or a module used in the terminal, or may be implemented by a logical module or software that can implement all or a part of functions of the terminal. The method includes: sending a scheduling request to a radio access network device, where the scheduling request is for requesting an uplink resource, and the uplink resource is used for transmission of uplink data; in first discontinuous reception DRX non-active time, determining a value relationship between a first time interval and a first threshold, where the first time interval is a time interval between a start moment of first DRX active time and a sending moment of the scheduling request, and the first DRX active time is 1^{st} DRX active time after the first DRX non-active time; and when the first time interval is less than the first threshold, starting to monitor a physical downlink control channel PDCCH in the first DRX active time, where the PDCCH is used for carrying downlink control information, and the downlink control information indicates the uplink resource.

According to the foregoing solution, when the first time interval is less than the first threshold, this indicates that the moment when the scheduling request is sent is close to next DRX active time (namely, the first DRX active time). Therefore, the terminal may continue to wait for arrival of the next DRX active time, and monitor the PDCCH in the next DRX active time. Because the PDCCH is monitored in the next DRX active time instead of current DRX non-active time, an additional increase in power consumption of the terminal can be avoided. In addition, because the moment when the scheduling request is sent is close to the next DRX active time, time for the terminal to wait for the arrival of the next DRX active time is also short, so that the uplink data does not expire. Therefore, compared with a solution of monitoring the PDCCH in the current DRX non-active time, this solution can reduce the power consumption of the terminal.

In an implementation method, DRX active time in embodiments of this application may be running time of a drx-onDurationTimer.

In a possible implementation method, when the first time interval is greater than the first threshold, the PDCCH starts to be monitored in the first DRX non-active time.

According to the foregoing solution, if the first time interval is greater than the first threshold, this indicates that the moment when the scheduling request is sent is away from the next DRX active time (namely, the first DRX active time). Therefore, the terminal monitors the PDCCH in the first DRX non-active time instead of waiting until the first DRX non-active time arrives and then monitoring the PDCCH. This can avoid service interruption or impact on quality of service caused by waiting for long time before the uplink data is sent.

In a possible implementation method, indication information is received from the radio access network device; and the determining a value relationship between a first time interval and a first threshold includes: determining the value relationship between the first time interval and the first threshold based on the indication information.

In a possible implementation method, the first threshold is configured by the radio access network device.

According to the foregoing solution, the radio access network device configures the first threshold, so that the first threshold can be accurately configured.

In a possible implementation method, the first threshold is determined based on a remaining packet delay budget PDB of the uplink data, where the remaining PDB is an upper limit of remaining duration for completing the transmission of the uplink data.

According to the foregoing solution, the terminal determines the first threshold, so that the first threshold can be accurately determined.

In a possible implementation method, when the first time interval is less than the first threshold, it is determined that the scheduling request is not sent in the first DRX non-active time.

According to the foregoing solution, because the scheduling request is not sent in the first DRX non-active time, the power consumption of the terminal can be reduced.

According to a second aspect, an embodiment of this application provides a DRX configuration-based communication method. The method may be performed by a terminal or a module used in the terminal, or may be implemented by a logical module or software that can implement all or a part of functions of the terminal. The method includes: determining to send a scheduling request, where the scheduling request is for requesting an uplink resource, and the uplink resource is used for transmission of uplink data; in second DRX non-active time, determining a value relationship between a second time interval and a second threshold, where the second time interval is a time interval between a start moment of a physical uplink control channel PUCCH in second DRX active time and a moment when it is determined to send the scheduling request, and the second DRX active time is 1^{st} DRX active time after the second DRX non-active time; and when the second time interval is less than the second threshold, sending the scheduling request on the PUCCH in the second DRX active time.

According to the foregoing solution, when the second time interval is less than the second threshold, this indicates that the moment when it is determined to send the scheduling request is close to next DRX active time (namely, the second DRX active time). Therefore, the terminal may continue to wait for arrival of the next DRX active time, and send the scheduling request and monitor a PDCCH in the next DRX active time. Because the scheduling request is sent and the PDCCH is monitored in the next DRX active time instead of current DRX non-active time, an additional increase in power consumption of the terminal can be avoided. In addition, because the moment when it is determined to send the scheduling request is close to the next DRX active time, time for the terminal to wait for the arrival of the next DRX active time is also short, so that the uplink data does not expire. Therefore, compared with a solution of sending the scheduling request and monitoring the PDCCH in the current DRX non-active time, this solution can reduce the power consumption of the terminal.

In a possible implementation method, when the second time interval is greater than the second threshold, the scheduling request is sent in the second DRX non-active time.

According to the foregoing solution, if the second time interval is greater than the second threshold, this indicates that the moment when it is determined to send the scheduling request is away from the next DRX active time (namely, the second DRX active time). Therefore, the terminal sends the scheduling request and monitors the PDCCH in the second DRX non-active time instead of waiting until the second DRX non-active time arrives and then sending the scheduling request and monitoring the PDCCH. This can avoid service interruption or impact on quality of service caused by waiting for long time before the uplink data is sent.

In a possible implementation method, indication information is received from a radio access network device; and the determining a value relationship between a second time interval and a second threshold includes: determining the value relationship between the second time interval and the second threshold based on the indication information.

In a possible implementation method, the second threshold is configured by the radio access network device.

According to the foregoing solution, the radio access network device configures the second threshold, so that the second threshold can be accurately configured.

In a possible implementation method, the second threshold is determined based on a remaining packet delay budget PDB of the uplink data, where the remaining PDB is an upper limit of remaining duration for completing the transmission of the uplink data.

According to the foregoing solution, the terminal determines the first threshold, so that the first threshold can be accurately determined.

In a possible implementation method, the PUCCH is a 1^{st} PUCCH in the second DRX active time.

According to the foregoing solution, the scheduling request is sent on the 1^{st} PUCCH in the second DRX active time. This helps quickly request allocation of the uplink resource, so that the uplink data can be sent as soon as possible, and a delay of sending the uplink data can be reduced.

According to a third aspect, an embodiment of this application provides a DRX configuration-based communication method. The method may be performed by a radio access network device or a module used in the radio access network device, or may be implemented by a logical module or software that can implement all or a part of functions of the radio access network device. The method includes: receiving a scheduling request from a terminal, where the scheduling request is for requesting an uplink resource, and the uplink resource is used for transmission of uplink data; in first discontinuous reception DRX non-active time, determining a value relationship between a first time interval and a first threshold, where the first time interval is a time interval between a start moment of first DRX active time and a sending moment of the scheduling request, and the first DRX active time is 1^{st} DRX active time after the first DRX non-active time; and when the first time interval is less than the first threshold, starting to send a physical downlink control channel PDCCH in the first DRX active time, where the PDCCH is used for carrying downlink control information, and the downlink control information indicates the uplink resource.

In a possible implementation method, when the first time interval is greater than the first threshold, the PDCCH starts to be sent in the first DRX non-active time.

In a possible implementation method, indication information is sent to the terminal, where the indication information indicates to determine whether to monitor the PDCCH in the first DRX non-active time.

In a possible implementation method, the first threshold is configured by the radio access network device.

In a possible implementation method, the first threshold is determined based on a remaining packet delay budget PDB of the uplink data, where the remaining PDB is an upper limit of remaining duration for completing the transmission of the uplink data.

According to a fourth aspect, an embodiment of this application provides a communication apparatus. The apparatus may be a terminal, or may be a module used in the terminal, or may be a logical module or software that can implement all or a part of functions of the terminal. The apparatus has a function of implementing any one of implementation methods in the first aspect or the second aspect. The function may be implemented by hardware, or may be implemented by hardware executing corresponding software. The hardware or the software includes one or more modules corresponding to the function.

According to a fifth aspect, an embodiment of this application provides a communication apparatus. The apparatus may be a radio access network device, or may be a module used in the radio access network device, or may be a logical module or software that can implement all or a part of functions of the radio access network device. The apparatus has a function of implementing any one of implementation methods in the third aspect. The function may be implemented by hardware, or may be implemented by hardware executing corresponding software. The hardware or the software includes one or more modules corresponding to the function.

According to a sixth aspect, an embodiment of this application provides a communication apparatus, including a unit configured to perform or a means (means) for performing steps of any one of implementation methods in the first aspect to the third aspect.

According to a seventh aspect, an embodiment of this application provides a communication apparatus, including a processor and an interface circuit. The processor is configured to communicate with another apparatus through the interface circuit, and perform any one of implementation methods in the first aspect to the third aspect. There are one or more processors.

According to an eighth aspect, an embodiment of this application provides a communication apparatus, including a processor coupled to a memory. The processor is configured to invoke a program stored in the memory, to perform any one of implementation methods in the first aspect to the third aspect. The memory may be located inside the apparatus, or may be located outside the apparatus. In addition, there may be one or more processors.

According to a ninth aspect, an embodiment of this application provides a communication apparatus, including a processor and a memory. The memory is configured to store computer instructions. When the apparatus runs, the processor executes the computer instructions stored in the memory, to cause the apparatus to perform any one of implementation methods in the first aspect to the third aspect.

According to a tenth aspect, an embodiment of this application further provides a computer-readable storage medium. The computer-readable storage medium stores a computer program or instructions. When the computer program or the instructions are run on a communication apparatus, any one of implementation methods in the first aspect to the third aspect is caused to be performed.

According to an eleventh aspect, an embodiment of this application further provides a computer program product. The computer program product includes a computer program or instructions. When the computer program or the instructions are run on a communication apparatus, any one of implementation methods in the first aspect to the third aspect is caused to be performed.

According to a twelfth aspect, an embodiment of this application further provides a chip system, including a processor configured to perform any one of implementation methods in the first aspect to the third aspect.

According to a thirteenth aspect, an embodiment of this application further provides a communication system, including a radio access network device and a terminal configured to perform any one of implementation methods in the first aspect. The radio access network device is configured to receive a scheduling request from the terminal, where the scheduling request is for requesting an uplink resource, and the uplink resource is used for transmission of uplink data.

According to a fourteenth aspect, an embodiment of this application further provides a communication system, including a radio access network device and a terminal configured to perform any one of implementation methods in the second aspect. The radio access network device is configured to receive a scheduling request from the terminal, where the scheduling request is for requesting an uplink resource, and the uplink resource is used for transmission of uplink data.

According to a fifteenth aspect, an embodiment of this application further provides a communication system, including a terminal and a radio access network device configured to perform any one of implementation methods in the third aspect. The terminal is configured to send a scheduling request to the radio access network device, where the scheduling request is for requesting an uplink resource, and the uplink resource is used for transmission of uplink data.

### BRIEF DESCRIPTION OF DRAWINGS

FIG. 1 is a diagram of an architecture of a communication system to which an embodiment of this application is applied;
FIG. 2 is a diagram of a DRX mechanism;
FIG. 3 is a diagram of sending uplink data by a terminal in a DRX mechanism;
FIG. 4(a) is a schematic flowchart of a DRX configuration-based communication method;
FIG. 4(b) is another schematic flowchart of a DRX configuration-based communication method;
FIG. 5(a) is an example diagram of sending a scheduling request;
FIG. 5(b) is another example diagram of sending a scheduling request;
FIG. 6 is a schematic flowchart of a DRX configuration-based communication method;
FIG. 7 is a schematic flowchart of a DRX configuration-based communication method;
FIG. 8 is a diagram of a structure of a communication apparatus according to an embodiment of this application; and
FIG. 9 is a diagram of a structure of a communication apparatus according to an embodiment of this application.

### DESCRIPTION OF EMBODIMENTS

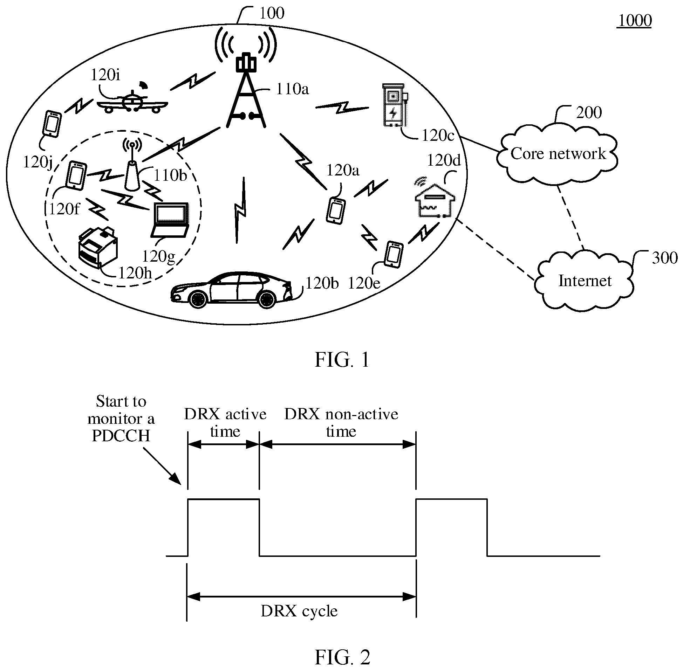

FIG. 1 is a diagram of an architecture of a communication system to which an embodiment of this application is applied. The communication system 1000 includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and a radio access network device may be independent and different physical devices, or functions of the core network device and logical functions of the radio access network device may be integrated into a same physical device, or a part of functions of the core network device and a part of functions of the radio access network device may be integrated into one physical device. Mutual connections between terminals and between radio access network devices may be implemented in a wired or wireless manner. FIG. 1 is only a diagram. The communication system may further include other network devices, for example, may further include a wireless relay device and a wireless backhaul device, which are not shown in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5G mobile communication system, a next generation base station in a 6th generation (6th generation, 6G) mobile communication system, a base station in a future mobile communication system, an access node in a wireless fidelity (wireless fidelity, Wi-Fi) system, or the like; or may be a module or a unit that completes a part of functions of the base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete a part or all of functions of a physical layer. For specific descriptions of the foregoing protocol layers, refer to related technical specifications of a 3rd generation partnership project (3rd generation partnership project, 3GPP). The radio access network device may be a macro base station (for example, 110a in FIG. 1), or may be a micro base station or an indoor base station (for example, 110b in FIG. 1), or may be a relay node or a donor node. All or a part of functions of the radio access network device in this application may alternatively be implemented via a software function running on hardware, or may be implemented via a virtualization function instantiated on a platform (for example, a cloud platform). A specific technology and a specific device form that are used by the radio access network device are not limited in embodiments of this application. In embodiments of this application, an example in which a base station is used as the radio access network device is used for description.

The terminal may also be referred to as a terminal device, user equipment (user equipment, UE), a mobile station, a mobile terminal, or the like. The terminal may be widely used in various scenarios, such as device-to-device (device-to-device, D2D), vehicle to everything (vehicle to everything, V2X) communication, machine-type communication (machine-type communication, MTC), an internet of things (internet of things, IoT), virtual reality, augmented reality, industrial control, autonomous driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a mechanical arm, a smart home device, or the like. All or a part of functions of the terminal in this application may alternatively be implemented via a software function running on hardware, or may be implemented via a virtualization function instantiated on a platform (for example, a cloud platform). A specific technology and a specific device form that are used by the terminal are not limited in embodiments of this application.

The base station and the terminal may be at fixed positions or may be movable. The base station and the terminal may be deployed on the land, including an indoor or outdoor device, a handheld device, or a vehicle-mounted device; may be deployed on a water surface; or may be deployed on an airplane, a balloon, and an artificial satellite in the air. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for a base station 110a, 120i is a terminal, that is, communication between 110a and 120i is performed through a radio air interface protocol. Certainly, communication between 110a and 120i may alternatively be performed through an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of a base station, and 120a to 120j each in FIG. 1 may be referred to as a communication apparatus having a function of a terminal.

Communication between the base station and the terminal, between stations, or between terminals may be performed by using a licensed spectrum, or may be performed by using an unlicensed spectrum, or may be performed by using both the licensed spectrum and the unlicensed spectrum. Communication may be performed via a spectrum below 6 gigahertz (gigahertz, GHz), or may be performed via a spectrum above 6 GHz, or may be performed via both the spectrum below 6 GHz and the spectrum above 6 GHz. A spectrum resource used for wireless communication is not limited in embodiments of this application.

In embodiments of this application, a function of the base station may alternatively be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, or a smart city. A function of the terminal may alternatively be performed by a module (for example, a chip or a modem) in the terminal, or may be performed by an apparatus including the function of the terminal.

In this application, the base station sends a downlink signal or downlink information to the terminal, where the downlink information is carried on a downlink channel. The terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is also subject to interference from a signal from a neighboring cell.

In embodiments of this application, a time domain symbol may be an orthogonal frequency division multiplexing (orthogonal frequency division multiplexing, OFDM) symbol, or may be a discrete Fourier transform-spread-OFDM (Discrete Fourier Transform-spread-OFDM, DFT-s-OFDM) symbol. Unless otherwise specified, a symbol in embodiments of this application is the time domain symbol.

It may be understood that, in embodiments of this application, a physical downlink shared channel (physical downlink shared channel, PDSCH), a physical downlink control channel (physical downlink control channel, PDCCH), a physical uplink shared channel (physical uplink shared channel, PUSCH), and a physical broadcast channel (physical broadcast channel, PBCH) are merely used as examples of a downlink data channel, a downlink control channel, an uplink data channel, and a broadcast channel. In different systems and different scenarios, the data channel, the control channel, and the broadcast channel may have different names. This is not limited in embodiments of this application.

For ease of understanding embodiments of this application, the following describes some terms or backgrounds in the present invention.

### 1. Scheduling request (scheduling request, SR) mechanism

In a 5G network, dynamic scheduling means that a base station uses control information in each slot to indicate a terminal to send data. A dynamic scheduling manner may be flexibly and rapidly changed based on a service requirement. However, each scheduling requires related control signaling, and control signaling overheads are high. For example, when a terminal needs to send uplink data, the terminal sends a scheduling request to a base station on a physical uplink control channel (physical uplink control channel, PUCCH). The scheduling request notifies the base station that the uplink data needs to be transmitted and is for requesting to schedule an uplink resource used for sending the uplink data, but does not notify the base station of how much data needs to be transmitted. After receiving the scheduling request, the base station responds to the scheduling request, and sends downlink control information (downlink control information, DCI) through a physical downlink control channel (physical downlink control channel, PDCCH). The DCI is for scheduling the uplink resource for the terminal. In this case, because the base station does not know how much data needs to be sent by the terminal, the base station performs uplink resource scheduling on the terminal based on a small and fixed data amount. The terminal sends, based on the DCI, the uplink data on a physical uplink shared channel (physical uplink shared channel, PUSCH) resource allocated by the base station, where the uplink data includes service data and a buffer status report (buffer status report, BSR), and the BSR notifies the base station of a remaining data amount that needs to be sent. If the BSR is greater than 0, the base station continues to schedule the uplink resource for the terminal through the PDCCH, and then the UE performs data transmission on the PUSCH resource indicated by the base station. It should be noted that, if the terminal does not receive the DCI from the base station after sending the scheduling request, the terminal may continue to send the scheduling request.

### 2. Discontinuous reception (discontinuous reception, DRX) mechanism

FIG. 2 is a diagram of a DRX mechanism. A DRX cycle includes DRX active time (On Duration) and DRX non-active time (opportunity for DRX). The DRX active time is also referred to as a DRX active period, DRX continuous reception time, or a DRX continuous reception period, or is referred to as active time, an active period, continuous reception time, or a continuous reception period for short. In the active time, a terminal is in an active state, and the terminal normally monitors a PDCCH. In the DRX non-active time, the terminal enters a sleep state, and does not monitor the PDCCH, to reduce power consumption. It should be noted that, the terminal in the DRX non-active time does not monitor the PDCCH, but may receive data from another physical channel, such as a physical downlink shared channel (physical downlink shared channel, PDSCH), an acknowledgement (acknowledgement, ACK) signal, or the like. The DRX non-active time is also referred to as a DRX non-active period, DRX discontinuous reception time, or a DRX discontinuous reception period, or is referred to as non-active time, a non-active period, discontinuous reception time, or a discontinuous reception period for short.

In an implementation method, a value of the DRX cycle may be configured based on a value of a downlink data arrival periodicity. For example, in an XR application scenario, an application server or a base station periodically sends downlink data to a terminal. If a value of a DRX cycle is equal to or approximately equal to a value of a downlink data periodicity, the terminal may receive the downlink data in active time of each DRX cycle; and in non-active time, the terminal remains in a sleep state and does not receive the downlink data. In this way, power consumption of the terminal can be reduced.

However, when receiving the downlink data, the terminal may also send uplink data, and the terminal may need to send the uplink data in the non-active time of the terminal. In this case, the terminal may need to enter an active state from the sleep state.

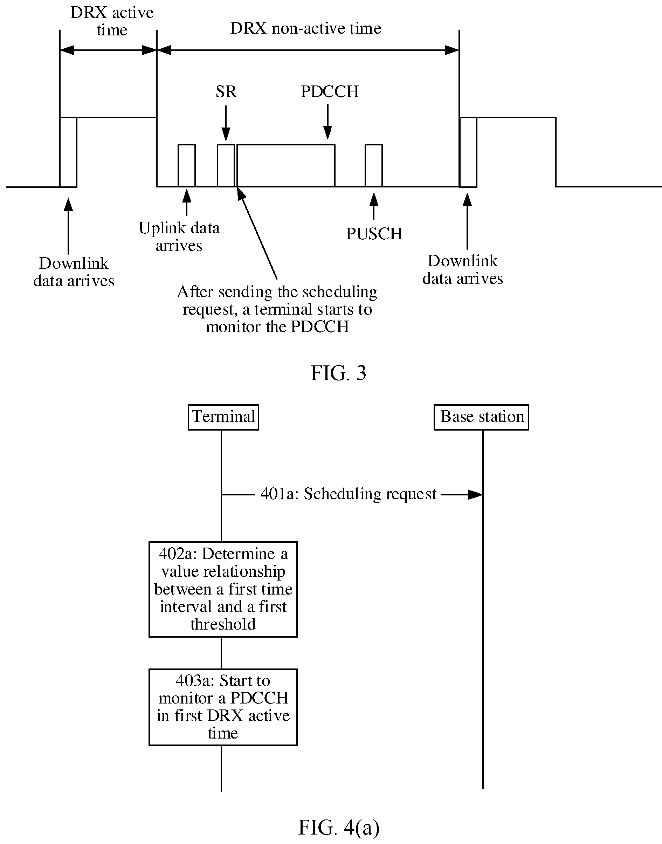

FIG. 3 is a diagram of sending uplink data by a terminal in a DRX mechanism. In DRX non-active time, uplink data arrives at the terminal, and there is no uplink resource available in this case. It can be learned from the scheduling request mechanism described above that the terminal needs to wake up from a sleep state, then sends a scheduling request to a base station through a PUCCH, and starts to monitor a PDCCH. A state of the terminal after the terminal determines to send the scheduling request and before the terminal completes sending of the scheduling request may be referred to as a pending (pending) state. When the terminal monitors the PDCCH, the terminal sends the uplink data based on the uplink resource scheduled by using DCI on the PDCCH, that is, sends the uplink data on a PUSCH, where the uplink data includes uplink service data. In an XR application scenario, the uplink service data may be VR service data, AR service data, cloud gaming (cloud gaming, CG) service data, and the like. Optionally, the uplink data further includes a BSR.

It can be learned that, in the foregoing DRX mechanism, the non-active time is configured for the terminal, and the terminal may generally enter the sleep state in the non-active time. In this way, power consumption is reduced. However, when the terminal needs to transmit the uplink data, the terminal still needs to wake up in the non-active time to send the scheduling request and monitor the PDCCH. In addition, when the terminal needs to send a large amount of uplink data, the terminal may need to frequently wake up from the sleep state to monitor the PDCCH. Consequently, the power consumption of the terminal is increased.

To resolve the foregoing problem, embodiments of this application provide a corresponding solution.

FIG. 4(a) is a schematic flowchart of a DRX configuration-based communication method according to an embodiment of this application. It may be understood that, in a schematic interaction flowchart of this application, the method is illustrated by using an example in which a base station and a terminal are used as execution bodies of an interaction example. However, the execution bodies of the interaction example are not limited in this application. For example, the base station in the figure may alternatively be a chip, a chip system, or a processor that supports the base station in implementing the method, or may be a logical module or software that can implement all or a part of functions of the base station. The terminal in the figure may alternatively be a chip, a chip system, or a processor that supports the terminal in implementing the method, or may be a logical module or software that can implement all or a part of functions of the terminal. The method includes the following steps.

Step 401a: The terminal sends a scheduling request to the base station. Correspondingly, the base station receives the scheduling request.

The scheduling request is for requesting an uplink resource, and the uplink resource is used for transmission of uplink data.

Specifically, when the uplink data arrives at the terminal, and there is no uplink resource available for sending the uplink data, the terminal sends the scheduling request to the base station.

The terminal may send the scheduling request in DRX active time, or may send the scheduling request in DRX non-active time.

Step 402a: In first DRX non-active time, the terminal determines a value relationship between a first time interval and a first threshold.

In an implementation method, when a first moment is in the first DRX non-active time, the terminal determines the value relationship between the first time interval and the first threshold. The first moment herein may be a current moment, or a moment when the scheduling request is sent, or a moment when it is determined to send the scheduling request.

The first time interval is a time interval between a start moment of first DRX active time and a sending moment of the scheduling request, and the first DRX active time is 1^{st} DRX active time after the first DRX non-active time.

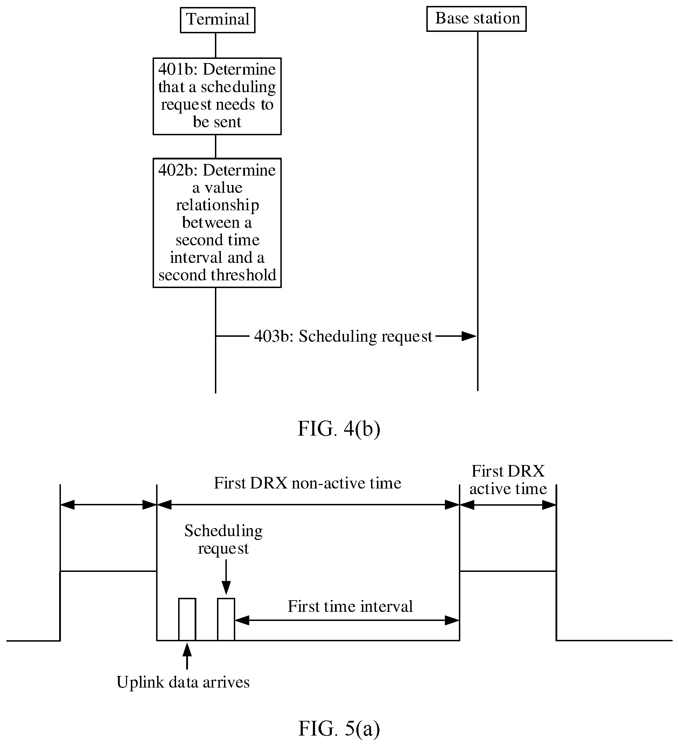

FIG. 5(a) is an example diagram of sending a scheduling request. When uplink data arrives in first DRX non-active time, a terminal sends the scheduling request to a base station, to request an uplink resource used for sending the uplink data. A time interval between a sending moment of the scheduling request and a start moment of first DRX active time is a first time interval.

Step 403a: When the first time interval is less than the first threshold, start to monitor a PDCCH in the first DRX active time.

The PDCCH is used for carrying DCI, and the DCI indicates the uplink resource.

The starting to monitor a PDCCH in the first DRX active time may also be expressed as: skipping monitoring the PDCCH in the first DRX non-active time. In other words, the terminal does not monitor the PDCCH in the first DRX non-active time, but starts to monitor the PDCCH in the first DRX active time.

According to the foregoing solution, when the first time interval is less than the first threshold, this indicates that the moment when the scheduling request is sent is close to next DRX active time (namely, the first DRX active time). Therefore, the terminal may continue to wait for arrival of the next DRX active time, and monitor the PDCCH in the next DRX active time. Because the PDCCH is monitored in the next DRX active time instead of current DRX non-active time, an additional increase in power consumption of the terminal can be avoided. In addition, because the moment when the scheduling request is sent is close to the next DRX active time, time for the terminal to wait for the arrival of the next DRX active time is also short, so that the uplink data does not expire. Therefore, compared with a solution of monitoring the PDCCH in the current DRX non-active time, this solution can reduce the power consumption of the terminal.

In an implementation method, if the first time interval is greater than the first threshold, this indicates that the moment when the scheduling request is sent is away from the next DRX active time (namely, the first DRX active time). Therefore, the terminal monitors the PDCCH in the first DRX non-active time instead of waiting until the first DRX non-active time arrives and then monitoring the PDCCH. This can avoid service interruption or impact on quality of service caused by waiting for long time before the uplink data is sent.

In a possible implementation method, when the first time interval is equal to the first threshold, the terminal starts to monitor the PDCCH in the first DRX non-active time, or the terminal starts to monitor the PDCCH in the first DRX active time.

In an implementation method, before the foregoing step 402a, the terminal further receives indication information from the base station, where the indication information indicates the terminal to determine whether to monitor the PDCCH in the first DRX non-active time. Therefore, the foregoing step 402a is specifically: In first DRX non-active time, the terminal determines a value relationship between a first time interval and a first threshold based on the indication information. This may be understood as that, the indication information triggers the terminal to determine the value relationship between the first time interval and the first threshold.

In an implementation method, the first threshold is determined by the terminal. For example, the terminal determines the first threshold based on a remaining packet delay budget (packet delay budget, PDB) of the uplink data, where the remaining PDB is an upper limit of remaining duration for completing the transmission of the uplink data. The remaining PDB may be a difference between a PDB and duration in which the to-be-sent uplink data is buffered. The PDB indicates maximum allowed duration for sending the uplink data, that is, the terminal needs to send the uplink data in the duration indicated by the PDB. This may also be understood as that the PDB indicates an upper limit of duration for completing the transmission of the uplink data. Therefore, this may further be understood as that the terminal determines the first threshold based on the PDB of the uplink data.

In an implementation method, the first threshold may alternatively be configured by the base station. The base station may determine the first threshold according to a same method for determining the first threshold by the terminal, and then send the first threshold to the terminal. Alternatively, the base station may determine the first threshold according to another method. This is not limited in this application. In an implementation method, the base station sends physical layer signaling (for example, DCI) or higher layer signaling (for example, medium access control control element (medium access control control element, MAC CE) or radio resource control (radio resource control, RRC) signaling) to the terminal, where the physical layer signaling or the higher layer signaling indicates the first threshold. For another example, the base station sends signaling a to the terminal, where the signaling a indicates a set, and the set includes a plurality of values. Then, the base station further sends signaling b to the terminal, where the signaling b indicates a value in the set, and the value is used as the first threshold. The signaling a is physical layer signaling or higher layer signaling, and the signaling b is physical layer signaling or higher layer signaling.

The following describes a specific value of the first threshold with reference to an example. For example, the base station estimates, based on load and channel estimation, that duration for completing scheduling of the uplink data is 5 ms, and a PDB of a current uplink service is 15 ms. In this case, the base station may configure the first threshold to be 10 ms, that is, the terminal may wait for a maximum of 10 ms. Alternatively, the base station configures estimated scheduling time of 5 ms, and the terminal calculates the first threshold based on current remaining scheduling time of 12 ms. For example, the first threshold is 7 ms. In an implementation method, after sending the scheduling request in step 401a, the terminal starts a timer. If the terminal does not receive, until the timer expires, the uplink resource scheduled by the base station for the terminal, that is, does not listen and detect the PDCCH for scheduling newly transmitted uplink data, the terminal may resend the scheduling request and restart the timer in the first DRX non-active time, and then continue to wait for the base station to schedule the uplink resource for the terminal. If the terminal receives, before the timer expires, the uplink resource scheduled by the base station for the terminal, the terminal stops the timer. A maximum quantity of times that the terminal resends the scheduling request may be preconfigured, or may be determined by the terminal.

In another implementation method, to further reduce the power consumption of the terminal, if the terminal determines that the first time interval is less than the first threshold in the foregoing step 402a, the terminal determines not to send the scheduling request in the first DRX non-active time. Alternatively, this is understood as that the terminal cancels resending of the scheduling request in the first DRX non-active time. This is because when the first time interval is less than the first threshold, the terminal does not monitor the PDCCH in the first DRX non-active time. Therefore, it is meaningless to resend the scheduling request in the first DRX non-active time. According to the solution, the power consumption of the terminal can be reduced. Optionally, the terminal may resend the scheduling request in the first DRX active time.

In an implementation method, after the foregoing step 401a, the base station receives the scheduling request. In first DRX non-active time, the base station determines a value relationship between a first time interval and a first threshold. When the first time interval is less than the first threshold, the base station starts to send a PDCCH in first DRX active time. When the first time interval is greater than the first threshold, the base station starts to send the PDCCH in the first DRX non-active time. When the first time interval is equal to the first threshold, the base station starts to send the PDCCH in the first DRX non-active time, or starts to send the PDCCH in the first DRX active time.

FIG. 4(b) is another schematic flowchart of a DRX configuration-based communication method according to an embodiment of this application. The method includes the following steps.

Step 401b: A terminal determines to send a scheduling request.

The scheduling request is for requesting an uplink resource, and the uplink resource is used for transmission of uplink data.

Specifically, when the uplink data arrives at the terminal, and there is no uplink resource available for sending the uplink data, the terminal determines to send the scheduling request.

The uplink data may arrive in DRX active time, or may arrive in DRX non-active time.

Step 402b: In second DRX non-active time, the terminal determines a value relationship between a second time interval and a second threshold.

In an implementation method, when a first moment is in the second DRX non-active time, the terminal determines the value relationship between the second time interval and the second threshold. The first moment herein may be a current moment, or a moment when the uplink data arrives, or a moment when it is determined to send the scheduling request.

The second time interval is a time interval between a start moment of a PUCCH in second DRX active time and a moment when it is determined to send the scheduling request, and the second DRX active time is 1^{st} DRX active time after the second DRX non-active time.

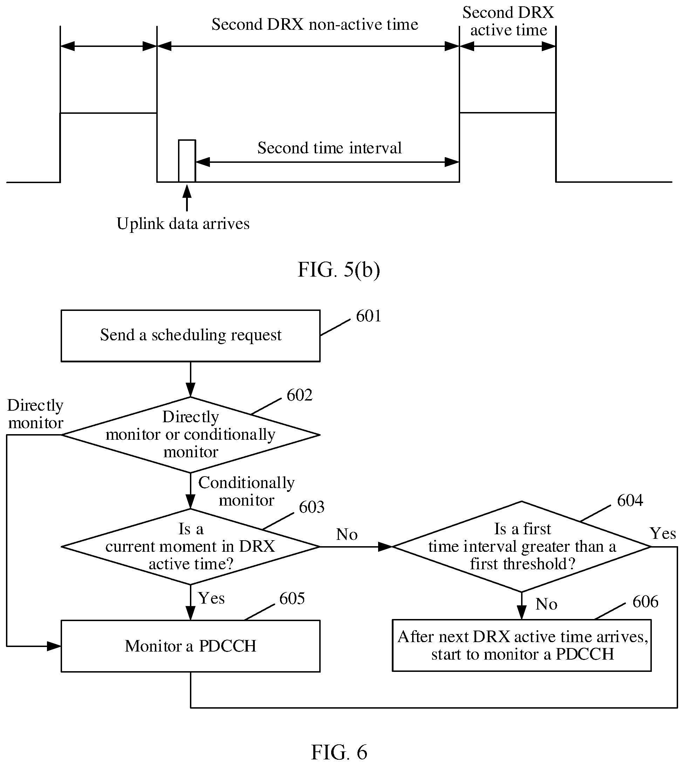

FIG. 5(b) is an example diagram of sending a scheduling request. When uplink data arrives in second DRX non-active time, a terminal determines to send the scheduling request to a base station, to request an uplink resource used for sending the uplink data. A time interval between a moment when it is determined to send the scheduling request and a start moment of second DRX active time is a second time interval. In this example, a moment after the uplink data arrives is used as the moment when it is determined to send the scheduling request.

Step 403b: When the second time interval is less than the second threshold, the terminal sends the scheduling request on the PUCCH in the second DRX active time.

The terminal sends the scheduling request on the PUCCH in the second DRX active time. This may also be expressed as: skipping sending the scheduling request in the second DRX non-active time. In other words, the terminal does not send the scheduling request in the second DRX non-active time, but sends the scheduling request in the second DRX active time.

After completing sending the scheduling request, the terminal starts to monitor a PDCCH, where the PDCCH is used for carrying DCI, and the DCI indicates the uplink resource.

In an implementation method, that the terminal sends the scheduling request on the PUCCH in the second DRX active time may be specifically: The terminal sends the scheduling request on a 1^{st} PUCCH in the second DRX active time. The 1^{st} PUCCH is a first PUCCH that is configured for the terminal and that is in the second DRX active time.

According to the foregoing solution, when the second time interval is less than the second threshold, this indicates that the moment when it is determined to send the scheduling request is close to next DRX active time (namely, the second DRX active time). Therefore, the terminal may continue to wait for arrival of the next DRX active time, and send the scheduling request and monitor the PDCCH in the next DRX active time. Because the scheduling request is sent and the PDCCH is monitored in the next DRX active time instead of current DRX non-active time, an additional increase in power consumption of the terminal can be avoided. In addition, because the moment when it is determined to send the scheduling request is close to the next DRX active time, time for the terminal to wait for the arrival of the next DRX active time is also short, so that the uplink data does not expire. Therefore, compared with a solution of sending the scheduling request and monitoring the PDCCH in the current DRX non-active time, this solution can reduce the power consumption of the terminal.

In an implementation method, if the second time interval is greater than the second threshold, this indicates that the moment when it is determined to send the scheduling request is away from the next DRX active time (namely, the second DRX active time). Therefore, the terminal sends the scheduling request and monitors the PDCCH in the second DRX non-active time instead of waiting until the second DRX non-active time arrives and then sending the scheduling request and monitoring the PDCCH. This can avoid service interruption or impact on quality of service caused by waiting for long time before the uplink data is sent.

In an implementation method, when the second time interval is equal to the second threshold, the terminal sends the scheduling request and starts to monitor the PDCCH in the second DRX active time, or sends the scheduling request and starts to monitor the PDCCH in the second DRX non-active time.

In an implementation method, before the foregoing step 402b, the terminal further receives indication information from the base station, where the indication information indicates the terminal to determine whether to send the scheduling request in the second DRX non-active time. Therefore, the foregoing step 402b is specifically: In second DRX non-active time, the terminal determines a value relationship between a second time interval and a second threshold based on the indication information. This may be understood as that, the indication information triggers the terminal to determine the value relationship between the second time interval and the second threshold.

In this embodiment, a method for obtaining the second threshold by the terminal is similar to the method for obtaining the first threshold by the terminal in the embodiment in FIG. 4(a). For details, refer to the foregoing descriptions. Details are not described again.

FIG. 6 is a schematic flowchart of a DRX configuration-based communication method. The embodiment in FIG. 6 is a specific implementation of the embodiment in FIG. 4(a). The method includes the following steps.

Step 601: A terminal sends a scheduling request to a base station in DRX non-active time through a PUCCH.

Specifically, when the terminal determines that uplink data needs to be sent, the terminal sends the scheduling request.

Step 602: The terminal determines to directly monitor a PDCCH or conditionally monitor the PDCCH. If the manner of directly monitoring the PDCCH is used, go to step 605. If the manner of conditionally monitoring the PDCCH is used, go to step 603.

In an implementation method, a manner of monitoring the PDCCH is preconfigured on the terminal.

In another implementation method, before step 601, the base station indicates, to the terminal, the manner of monitoring the PDCCH. For example, the base station sends physical layer signaling (for example, DCI) or higher layer signaling (for example, MAC CE or RRC signaling) to the terminal, where the physical layer signaling or the higher layer signaling indicates the manner of monitoring the PDCCH. For another example, the base station sends signaling 1 to the terminal, where the signaling 1 indicates a set, and the set includes indication information 1 indicating to directly monitor the PDCCH and indication information 2 indicating to conditionally monitor the PDCCH. Then, the base station further sends signaling 2 to the terminal, where the signaling 2 indicates the indication information 1 or the indication information 2 in the set. The signaling 1 is physical layer signaling or higher layer signaling, and the signaling 2 is physical layer signaling or higher layer signaling.

Step 603: The terminal determines whether a current moment is in DRX active time. If the current moment is in the DRX active time, go to step 605. If the current moment is in the DRX non-active time (also referred to as first DRX non-active time), go to step 604.

If the current moment is in the DRX active time, the terminal is in an active state. Therefore, that the terminal monitors the PDCCH does not additionally increase power consumption of the terminal.

If the current moment is not in the DRX active time, in other words, is in the DRX non-active time, the terminal is in a sleep state and does not monitor the PDCCH in the DRX non-active time. Therefore, if the terminal monitors the PDCCH in a DRX non-active state, power consumption of the terminal is additionally increased. In this case, the terminal needs to further determine whether the terminal needs to monitor the PDCCH in the DRX non-active time.

Step 604: The terminal determines whether a first time interval is greater than a first threshold. If the first time interval is greater than the first threshold, go to step 605. If the first time interval is less than or equal to the first threshold, go to step 606.

For meanings of the first time interval and the first threshold, refer to descriptions of the embodiment in FIG. 4(a).

If the first time interval is greater than the first threshold, this indicates that a moment when the scheduling request is sent is away from next DRX active time. Therefore, the terminal does not monitor the PDCCH in the next DRX active time, but monitors the PDCCH in current DRX non-active time. This avoids service interruption or impact on quality of service caused by waiting for long time before the uplink data is sent.

If the first time interval is less than the first threshold, this indicates that the moment when the scheduling request is sent is close to the next DRX active time. Therefore, the terminal may continue to wait for arrival of the next DRX active time, and monitor the PDCCH in the next DRX active time. Because the PDCCH is monitored in the next DRX active time instead of the current DRX non-active time, an additional increase in the power consumption of the terminal can be avoided. In addition, because the moment when the scheduling request is sent is close to the next DRX active time, time for the terminal to wait for the arrival of the next DRX active time is also short, so that the uplink data does not expire. Therefore, compared with a solution of monitoring the PDCCH in the current DRX non-active time, this solution can reduce the power consumption of the terminal.

In an implementation method, if a service to which the to-be-sent uplink data belongs is not an emergency service, a value of the first threshold may be set to be large, so that it is easier to enter step 606 after step 604. In this way, an objective of reducing the power consumption of the terminal is achieved.

Step 605: The terminal monitors the PDCCH.

Specifically, the terminal wakes up and monitors the PDCCH in the DRX non-active time.

Step 606: After the next DRX active time arrives, the terminal starts to monitor the PDCCH.

In other words, the terminal does not monitor the PDCCH in the current DRX non-active time, but monitors the PDCCH in the next DRX active time after the next DRX active time arrives, to cause the terminal not to monitor the PDCCH in the DRX non-active time. In this way, the power consumption of the terminal can be reduced.

In an implementation method, after sending the scheduling request in step 601, the terminal starts a timer. If the terminal does not receive, until the timer expires, an uplink resource scheduled by the base station for the terminal, the terminal may resend the scheduling request and restart the timer in the DRX non-active time, and then continue to wait for the base station to schedule the uplink resource for the terminal. If the terminal receives, before the timer expires, the uplink resource scheduled by the base station for the terminal, the terminal stops the timer. A maximum quantity of times that the terminal resends the scheduling request may be preconfigured, or may be determined by the terminal.

In an implementation method, to further reduce the power consumption of the terminal, when going to perform step 606 after the foregoing step 604, the terminal may further determine not to send the scheduling request in the DRX non-active time. Alternatively, this is understood as that the terminal cancels resending of the scheduling request in the DRX non-active time. This is because when the first time interval is less than the first threshold, the terminal does not monitor the PDCCH in the DRX non-active time. Therefore, it is meaningless to resend the scheduling request in the DRX non-active time. According to the solution, the power consumption of the terminal can be reduced. Optionally, the terminal may resend the scheduling request in the next DRX active time.

According to the foregoing solution, without reducing an amount of data to be sent, the terminal can avoid frequently waking up and monitoring the PDCCH in the DRX non-active time. In this way, the power consumption of the terminal can be reduced.

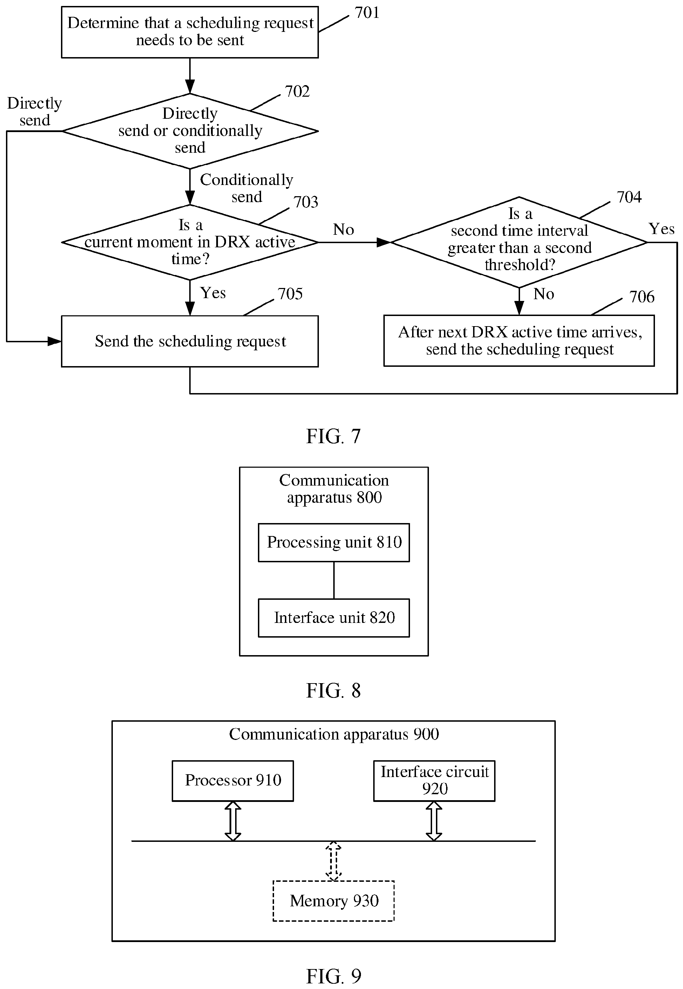

FIG. 7 is a schematic flowchart of a DRX configuration-based communication method. The embodiment in FIG. 7 is a specific implementation of the embodiment in FIG. 4(b). The method includes the following steps.

Step 701: A terminal determines to send a scheduling request.

When the terminal needs to send uplink data and the terminal has no uplink resource, the terminal determines to send the scheduling request.

Step 702: The terminal determines to directly send the scheduling request or conditionally send the scheduling request. If the manner of directly sending the scheduling request is used, go to step 705. If the manner of conditionally sending the scheduling request is used, go to step 703.

In an implementation method, a manner of sending the scheduling request is preconfigured on the terminal.

In another implementation method, before step 701, a base station indicates, to the terminal, the manner of sending the scheduling request. For example, the base station sends physical layer signaling (for example, DCI) or higher layer signaling (for example, MAC CE or RRC signaling) to the terminal, where the physical layer signaling or the higher layer signaling indicates the manner of sending the scheduling request. For another example, the base station sends signaling 1 to the terminal, where the signaling 1 indicates a set, and the set includes indication information 1 indicating to directly send the scheduling request and indication information 2 indicating to conditionally send the scheduling request. Then, the base station further sends signaling 2 to the terminal, where the signaling 2 indicates the indication information 1 or the indication information 2 in the set. The signaling 1 is physical layer signaling or higher layer signaling, and the signaling 2 is physical layer signaling or higher layer signaling.

Step 703: The terminal determines whether a current moment is in DRX active time. If the current moment is in the DRX active time, go to step 705. If the current moment is not in the DRX active time, go to step 704.

If the current moment is in the DRX active time, the terminal is in an active state. Therefore, that the terminal directly sends the scheduling request does not additionally increase power consumption of the terminal.

If the current moment is not in the DRX active time, in other words, is in non-active time, the terminal is in a sleep state. In this case, if the terminal is to directly send the scheduling request, the terminal needs to first wake up from the sleep state and then send the scheduling request, and the terminal further needs to monitor a PDCCH. Therefore, the power consumption of the terminal is additionally increased. In this case, the terminal needs to further determine whether the terminal needs to wake up, send the scheduling request, and monitor the PDCCH in the DRX non-active time.

Step 704: The terminal determines whether a second time interval is greater than a second threshold. If the second time interval is greater than the second threshold, go to step 705. If the second time interval is less than or equal to the second threshold, go to step 706.

For meanings of the second time interval and the second threshold, refer to descriptions of the embodiment in FIG. 4(b).

If the second time interval is greater than the second threshold, this indicates that a moment when it is determined to send the scheduling request is away from a start moment of a PUCCH in next DRX active time. Therefore, the terminal does not send the scheduling request in the next DRX active time, but sends the scheduling request in current DRX non-active time. This avoids service interruption or impact on quality of service caused by waiting for long time before the uplink data is sent.

If the second time interval is less than or equal to the second threshold, this indicates that the moment when it is determined to send the scheduling request is close to the start moment of the PUCCH in the next DRX active time. Therefore, the terminal may continue to wait for arrival of the next DRX active time, and send the scheduling request and monitor the PDCCH in the next DRX active time. Because the scheduling request is sent and the PDCCH is monitored in the next DRX active time instead of waking up the terminal, sending the scheduling request, and monitoring the PDCCH in the current DRX non-active time, an additional increase in the power consumption of the terminal can be avoided. In addition, because the moment when it is determined to send the scheduling request is close to a start moment of a 1^{st} PUCCH in the next DRX active time, time for the terminal to wait for arrival of the start moment of the 1^{st} PUCCH in the next DRX active time is also short, so that the uplink data does not expire. Therefore, compared with a solution of waking up the terminal, sending the scheduling request, and monitoring the PDCCH in the current DRX non-active time, this solution can reduce the power consumption of the terminal.

A method for configuring the second threshold is similar to the method for configuring the first threshold in the foregoing embodiment in FIG. 6. For details, refer to the foregoing descriptions. Details are not described again.

In an implementation method, if a service to which the to-be-sent uplink data belongs is not an emergency service, a value of the second threshold may be set to be large, so that it is easier to enter step 706 after step 704. In this way, an objective of reducing the power consumption of the terminal is achieved.

Step 705: The terminal sends the scheduling request.

Specifically, the terminal wakes up and sends the scheduling request in the DRX non-active time, and further monitors the PDCCH after sending the scheduling request.

Step 706: After the next DRX active time arrives, the terminal starts to send the scheduling request.

In other words, the terminal does not send the scheduling request and monitor the PDCCH in the current DRX non-active time, but sends the scheduling request and monitors the PDCCH in the next DRX active time after the next DRX active time arrives, to cause the terminal not to send the scheduling request and monitor the PDCCH in the DRX non-active time. In this way, the power consumption of the terminal can be reduced.

According to the foregoing solution, without reducing an amount of data to be sent, the terminal can avoid frequently waking up, sending the scheduling request, and monitoring the PDCCH in the DRX non-active time. In this way, the power consumption of the terminal can be reduced.

It may be understood that, to implement functions in the foregoing embodiments, the base station and the terminal include corresponding hardware structures and/or software modules for performing the functions. A person skilled in the art should be easily aware that, in this application, units and method steps described in examples with reference to embodiments disclosed in this application can be implemented in a form of hardware or a combination of hardware and computer software. Whether a function is performed by hardware or hardware driven by computer software depends on particular application scenarios and design constraints of the technical solutions.

FIG. 8 and FIG. 9 are diagrams of structures of possible communication apparatuses according to embodiments of this application. The communication apparatuses may be configured to implement functions of the terminal or the base station in the foregoing method embodiments, and therefore can also achieve beneficial effects of the foregoing method embodiments. In embodiments of this application, the communication apparatus may be one of the terminals 120a to 120j shown in FIG. 1, or may be the base station 110a or 110b shown in FIG. 1, or may be a module (for example, a chip) used in the terminal or the base station.

The communication apparatus 800 shown in FIG. 8 includes a processing unit 810 and an interface unit 820. The communication apparatus 800 is configured to implement functions of the terminal or the base station in the foregoing method embodiments.

When the communication apparatus 800 is configured to implement functions of the terminal in the method embodiments in FIG. 4(a) or FIG. 6, the interface unit 820 is configured to send a scheduling request to a radio access network device, where the scheduling request is for requesting an uplink resource, and the uplink resource is used for transmission of uplink data; and the processing unit 810 is configured to: in first discontinuous reception DRX non-active time, determine a value relationship between a first time interval and a first threshold, where the first time interval is a time interval between a start moment of first DRX active time and a sending moment of the scheduling request, and the first DRX active time is 1^{st} DRX active time after the first DRX non-active time; and when the first time interval is less than the first threshold, start to monitor a physical downlink control channel PDCCH in the first DRX active time, where the PDCCH is used for carrying downlink control information, and the downlink control information indicates the uplink resource.

In a possible implementation method, the processing unit 810 is further configured to: when the first time interval is greater than the first threshold, start to monitor the PDCCH in the first DRX non-active time.

In a possible implementation method, the interface unit 820 is further configured to receive indication information from the radio access network device; and the processing unit 810 is specifically configured to determine the value relationship between the first time interval and the first threshold based on the indication information.

In a possible implementation method, the first threshold is configured by the radio access network device.

In a possible implementation method, the processing unit 810 is further configured to determine the first threshold based on a remaining packet delay budget PDB of the uplink data, where the remaining PDB is an upper limit of remaining duration for completing the transmission of the uplink data.

In a possible implementation method, the processing unit 810 is further configured to: when the first time interval is less than the first threshold, determine not to send the scheduling request in the first DRX non-active time.

When the communication apparatus 800 is configured to implement functions of the terminal in the method embodiments in FIG. 4(b) or FIG. 7, the processing unit 810 is configured to determine to send a scheduling request, where the scheduling request is for requesting an uplink resource, and the uplink resource is used for transmission of uplink data; and in second DRX non-active time, determine a value relationship between a second time interval and a second threshold, where the second time interval is a time interval between a start moment of a physical uplink control channel PUCCH in second DRX active time and a moment when it is determined to send the scheduling request, and the second DRX active time is 1^{st} DRX active time after the second DRX non-active time; and the interface unit 820 is configured to: when the second time interval is less than the second threshold, send the scheduling request on the PUCCH in the second DRX active time.

In a possible implementation method, the interface unit 820 is further configured to: when the second time interval is greater than the second threshold, send the scheduling request in the second DRX non-active time.

In a possible implementation method, the interface unit 820 is further configured to receive indication information from a radio access network device; and the processing unit 810 is specifically configured to determine the value relationship between the second time interval and the second threshold based on the indication information.

In a possible implementation method, the second threshold is configured by the radio access network device.

In a possible implementation method, the processing unit 810 is further configured to determine the second threshold based on a remaining packet delay budget PDB of the uplink data, where the remaining PDB is an upper limit of remaining duration for completing the transmission of the uplink data.

In a possible implementation method, the PUCCH is a 1^{st} PUCCH in the second DRX active time.

When the communication apparatus 800 is configured to implement functions of the radio access network device in the method embodiments in FIG. 4(a) or FIG. 6, the interface unit 820 is configured to receive a scheduling request from a terminal, where the scheduling request is for requesting an uplink resource, and the uplink resource is used for transmission of uplink data; the processing unit 810 is configured to: in a first DRX non-active time, determine a value relationship between a first time interval and a first threshold, where the first time interval is a time interval between a start moment of first DRX active time and a sending moment of the scheduling request, and the first DRX active time is 1^{st} DRX active time after the first DRX non-active time; and the interface unit 820 is further configured to: when the first time interval is less than the first threshold, start to send a physical downlink control channel PDCCH in the first DRX active time, where the PDCCH is used for carrying downlink control information, and the downlink control information indicates the uplink resource.

In a possible implementation method, the interface unit 820 is further configured to: when the first time interval is greater than the first threshold, start to send the PDCCH in the first DRX non-active time.

In a possible implementation method, the interface unit 820 is further configured to send indication information to the terminal, where the indication information indicates to determine whether to monitor the PDCCH in the first DRX non-active time.

In a possible implementation method, the first threshold is configured by the radio access network device.

In a possible implementation method, the processing unit 810 is further configured to determine the first threshold based on a remaining packet delay budget PDB of the uplink data, where the remaining PDB is an upper limit of remaining duration for completing the transmission of the uplink data.

For more detailed descriptions of the processing unit 810 and the interface unit 820, directly refer to related descriptions in the foregoing method embodiments. Details are not described herein again.

The communication apparatus 900 shown in FIG. 9 includes a processor 910 and an interface circuit 920. The processor 910 and the interface circuit 920 are coupled to each other. It may be understood that, the interface circuit 920 may be a transceiver or an input/output interface. Optionally, a communication apparatus 800 may further include a memory 930 configured to store instructions executed by the processor 910, or store input data required by the processor 910 to run the instructions, or store data generated after the processor 910 runs the instructions.

When the communication apparatus 900 is configured to implement the foregoing method embodiments, the processor 910 is configured to implement a function of the foregoing processing unit 810, and the interface circuit 920 is configured to implement a function of the foregoing the interface unit 820.

When the communication apparatus is a chip used in a terminal, the chip in the terminal implements a function of the terminal in the foregoing method embodiments. The chip in the terminal receives information from another module (for example, a radio frequency module or an antenna) in the terminal, and the information is sent by a base station to the terminal. Alternatively, the chip in the terminal sends information to another module (for example, a radio frequency module or an antenna) in the terminal, and the information is sent by the terminal to a base station.

When the communication apparatus is a module used in a base station, the module in the base station implements a function of the base station in the foregoing method embodiments. Th module in the base station receives information from another module (for example, a radio frequency module or an antenna) in the base station, and the information is sent by a terminal to the base station. Alternatively, the module in the base station sends information to another module (for example, a radio frequency module or an antenna) in the base station, and the information is sent by the base station to a terminal. The module in the base station herein may be a baseband chip in the base station, or may be a DU or another module. The DU herein may be a DU in an open radio access network (open radio access network, O-RAN) architecture.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

Method steps in embodiments of this application may be implemented in a hardware manner, or may be implemented by a processor by executing software instructions. The software instructions may be formed by corresponding software modules. The software modules may be stored in a random access memory, a flash memory, a read-only memory, a programmable read-only memory, an erasable programmable read-only memory, an electrically erasable programmable read-only memory, a register, a hard disk drive, a removable hard disk, and a compact disk read-only memory (compact disc read-only memory, CD-ROM) or any other form of storage medium well known in the art. For example, a storage medium is coupled to a processor, so that the processor can read information from the storage medium and write information to the storage medium. Certainly, the storage medium may alternatively be a component of the processor. The processor and the storage medium may be located in an ASIC. In addition, the ASIC may be located in a base station or a terminal. Certainly, the processor and the storage medium may alternatively exist in a base station or a terminal as discrete components.

All or a part of the foregoing embodiments may be implemented by using software, hardware, firmware, or any combination thereof. When the software is used for implementing embodiments, all or a part of embodiments may be implemented in a form of a computer program product. The computer program product includes one or more computer programs or instructions. When the computer programs or the instructions are loaded and executed on a computer, all or a part of procedures or functions in embodiments of this application are performed. The computer may be a general-purpose computer, a dedicated computer, a computer network, a base station, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, a computer, a server, or a data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, such as a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or there is a logical conflict, terms and/or descriptions in different embodiments are consistent and may be mutually referenced. Technical features in different embodiments may be combined based on an internal logical relationship thereof, to form a new embodiment.

In this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. In text descriptions of this application, the character "/" generally indicates an "or" relationship between associated objects. **In** a formula in this application, the character "/" indicates a "division" relationship between the associated objects.

It may be understood that, various numbers in embodiments of this application are merely used for differentiation for ease of description, but are not used to limit the scope of embodiments of this application. Sequence numbers of the foregoing processes do not mean execution sequences. The execution sequences of the processes should be determined based on functions and internal logic of the processes.

## Claims

1. A DRX configuration-based communication method, comprising:
sending a scheduling request to a radio access network device, wherein the scheduling request is for requesting an uplink resource, and the uplink resource is used for transmission of uplink data;
in first discontinuous reception DRX non-active time, determining a value relationship between a first time interval and a first threshold, wherein the first time interval is a time interval between a start moment of first DRX active time and a sending moment of the scheduling request, and the first DRX active time is 1^{st} DRX active time after the first DRX non-active time; and
when the first time interval is less than the first threshold, starting to monitor a physical downlink control channel PDCCH in the first DRX active time, wherein the PDCCH is used for carrying downlink control information, and the downlink control information indicates the uplink resource.

2. The method according to claim 1, wherein the method further comprises:
when the first time interval is greater than the first threshold, starting to monitor the PDCCH in the first DRX non-active time.

3. The method according to claim 1 or 2, wherein the method further comprises:
receiving indication information from the radio access network device; and
the determining a value relationship between a first time interval and a first threshold comprises:
determining the value relationship between the first time interval and the first threshold based on the indication information.

4. The method according to any one of claims 1 to 3, wherein the first threshold is configured by the radio access network device.

5. The method according to any one of claims 1 to 3, wherein the method further comprises:
determining the first threshold based on a remaining packet delay budget PDB of the uplink data, wherein the remaining PDB is an upper limit of remaining duration for completing the transmission of the uplink data.

6. The method according to any one of claims 1 to 5, wherein the method further comprises:
when the first time interval is less than the first threshold, determining not to send the scheduling request in the first DRX non-active time.

7. A DRX configuration-based communication method, comprising:
determining to send a scheduling request, wherein the scheduling request is for requesting an uplink resource, and the uplink resource is used for transmission of uplink data;
in second DRX non-active time, determining a value relationship between a second time interval and a second threshold, wherein the second time interval is a time interval between a start moment of a physical uplink control channel PUCCH in second DRX active time and a moment when it is determined to send the scheduling request, and the second DRX active time is 1^{st} DRX active time after the second DRX non-active time; and
when the second time interval is less than the second threshold, sending the scheduling request on the PUCCH in the second DRX active time.

8. The method according to claim 7, wherein the method further comprises:
when the second time interval is greater than the second threshold, sending the scheduling request in the second DRX non-active time.

9. The method according to claim 7 or 8, wherein the method further comprises:
receiving indication information from a radio access network device; and
the determining a value relationship between a second time interval and a second threshold comprises:
determining the value relationship between the second time interval and the second threshold based on the indication information.

10. The method according to any one of claims 7 to 9, wherein the second threshold is configured by the radio access network device.

11. The method according to any one of claims 7 to 9, wherein the method further comprises:
determining the second threshold based on a remaining packet delay budget PDB of the uplink data, wherein the remaining PDB is an upper limit of remaining duration for completing the transmission of the uplink data.

12. The method according to any one of claims 7 to 11, wherein the PUCCH is a 1^{st} PUCCH in the second DRX active time.

13. A communication apparatus, comprising:
an interface unit, configured to send a scheduling request to a radio access network device, wherein the scheduling request is for requesting an uplink resource, and the uplink resource is used for transmission of uplink data; and
a processing unit, configured to: in first discontinuous reception DRX non-active time, determine a value relationship between a first time interval and a first threshold, wherein the first time interval is a time interval between a start moment of first DRX active time and a sending moment of the scheduling request, and the first DRX active time is 1^{st} DRX active time after the first DRX non-active time; and when the first time interval is less than the first threshold, start to monitor a physical downlink control channel PDCCH in the first DRX active time, wherein the PDCCH is used for carrying downlink control information, and the downlink control information indicates the uplink resource.

14. The apparatus according to claim 13, wherein the processing unit is further configured to: when the first time interval is greater than the first threshold, start to monitor the PDCCH in the first DRX non-active time.

15. The apparatus according to claim 13 or 14, wherein the interface unit is further configured to receive indication information from the radio access network device; and
the processing unit is specifically configured to determine the value relationship between the first time interval and the first threshold based on the indication information.

16. The apparatus according to any one of claims 13 to 15, wherein the first threshold is configured by the radio access network device.

17. The apparatus according to any one of claims 13 to 15, wherein the processing unit is further configured to determine the first threshold based on a remaining packet delay budget PDB of the uplink data, wherein the remaining PDB is an upper limit of remaining duration for completing the transmission of the uplink data.

18. The apparatus according to any one of claims 13 to 17, wherein the processing unit is further configured to: when the first time interval is less than the first threshold, determine not to send the scheduling request in the first DRX non-active time.

19. A communication apparatus, comprising:
a processing unit, configured to determine to send a scheduling request, wherein the scheduling request is for requesting an uplink resource, and the uplink resource is used for transmission of uplink data; and in second DRX non-active time, determine a value relationship between a second time interval and a second threshold, wherein the second time interval is a time interval between a start moment of a physical uplink control channel PUCCH in second DRX active time and a moment when it is determined to send the scheduling request, and the second DRX active time is 1^{st} DRX active time after the second DRX non-active time; and
an interface unit, configured to: when the second time interval is less than the second threshold, send the scheduling request on the PUCCH in the second DRX active time.

20. The apparatus according to claim 19, wherein the interface unit is further configured to: when the second time interval is greater than the second threshold, send the scheduling request in the second DRX non-active time.

21. The apparatus according to claim 19 or 20, wherein the interface unit is further configured to receive indication information from a radio access network device; and
the processing unit is specifically configured to determine the value relationship between the second time interval and the second threshold based on the indication information.

22. The apparatus according to any one of claims 19 to 21, wherein the second threshold is configured by the radio access network device.

23. The apparatus according to any one of claims 19 to 21, wherein the processing unit is further configured to determine the second threshold based on a remaining packet delay budget PDB of the uplink data, wherein the remaining PDB is an upper limit of remaining duration for completing the transmission of the uplink data.

24. The apparatus according to any one of claims 19 to 23, wherein the PUCCH is a I^{st} PUCCH in the second DRX active time.

25. A communication apparatus, comprising a processor, wherein the processor is coupled to a memory, and the memory is configured to store a program or instructions; and when the program or the instructions are executed by the processor, the communication apparatus is caused to perform the method according to any one of claims 1 to 6 or the method according to any one of claims 7 to 12.

26. A chip system, wherein the chip system comprises at least one processor and an interface circuit, the interface circuit is coupled to the at least one processor, and the processor runs instructions to perform the method according to any one of claims 1 to 6 or the method according to any one of claims 7 to 12.

27. A computer-readable storage medium, wherein the storage medium stores a computer program or instructions; and when the computer program or the instructions are executed by a communication apparatus, the method according to any one of claims 1 to 6 or the method according to any one of claims 7 to 12 is implemented.

28. A communication system, comprising a radio access network device and a terminal configured to perform the method according to any one of claims 1 to 6, wherein
the radio access network device is configured to receive a scheduling request from the terminal, wherein the scheduling request is for requesting an uplink resource, and the uplink resource is used for transmission of uplink data.

29. A communication system, comprising a radio access network device and a terminal configured to perform the method according to any one of claims 7 to 12, wherein
the radio access network device is configured to receive a scheduling request from the terminal, wherein the scheduling request is for requesting an uplink resource, and the uplink resource is used for transmission of uplink data.

30. A communication apparatus, comprising a unit configured to perform the method according to any one of claims 1 to 6 or the method according to any one of claims 7 to 12.

31. A computer program product, comprising a computer program or instructions, wherein when the program or the instructions are run, the method according to any one of claims 1 to 6 or the method according to any one of claims 7 to 12 is performed.
